# EUROPEAN PATENT APPLICATION

(11) **EP 4 316 690 A1**
(43) Date of publication of application: **07.02.2024**
(21) Application number: 22205685.5
(22) Date of filing: 06.11.2022
(51) Int. Cl.: B22C 15/00, B22C 19/00, B22C 19/04, B22C 21/12, B06B 1/10

(54) **STAND FOR HIGH FREQUENCY VIBRATING COMPACTING THE MOLDING SAND**

(30) Priority: 05.08.2022 PL 44197122
(71) Applicant: Krakodlew spolka akcyjna, 30-969 Krakow (PL)
(72) Inventor: Sikora, Jakub, Kraków (PL); Mirek, Piotr, Kraków (PL); Zegartowski, Andrzej, Kraków (PL); Piotrowski, Krzysztof, Kraków (PL); Zió ko, Agnieszka, Kraków (PL)
(74) Representative: Bartula-Toch, Marta

(57) **Abstract**

The station consists of a set of rubber dampers (1) distributed uniformly under a mould base (2) lying horizontally thereon, with a moulding flask (3) placed thereon, with a pattern placed therein, wherein the moulding flask (3) has attached to it by means of adjustable clamps (5) at least one electric vibrator (4) with power between 0.5 and 1.5 kW connected to a control console (6), which is in turn connected to at least two linear acceleration measuring transducers (7) attached to the outer walls of the moulding flask (3) in a manner which enables recording the acceleration values in two mutually perpendicular axes; moreover, the control console (6) is provided with a frequency changer (8) with an adjustment range of 0 to 200 Hz.

## Description

The object of the invention is a station for high-frequency vibratory compaction of moulding sand, especially based on a furan cement, and a method for high-frequency vibratory compaction of moulding sand.

From common usage, there are various known methods for compacting moulding sand, including manually, mechanically by means of a wooden rammer, or by a moulder 'stomping' on the sand. Depending on the degree of complexity of the mould, the size and amount of sand necessary to mould the pattern, the setting rate of moulding sand, moulding plant workers are forced to perform mechanical or manual compaction of the sand, being limited to the mounting places of cores, chamotte moulds, filters, and gating systems. The abovementioned conditions, limitations, and the existing human factor result in the inability to provide a higher and uniform degree of compaction of the moulding sand in the entire volume of the mould, which directly translates into the qualitative, geometrical and dimensional parameters of the final product. Additionally, in the case of moulds of considerable dimensions, it is necessary to involve a larger number of workers, so as to perform the moulding cycle without interruption. Interrupting the cycle may lead to nonuniform curing of the moulding sand. The described method of performing the moulding process is highly inefficient and largely dependent on the human factor.

There are also known methods for vibratory compaction of moulding sand, on vibrating tables or by the use of electric vibrators attached to the mould. The electric vibrators used in these solutions have constant operating parameters: the rotational speed (usually 2800-2900 rpm) as well as the driving force. The magnitude of the driving force of the vibrators must be properly adjusted to the total mass of the vibrating moulding assembly comprising a vibrating table, a moulding pattern, a moulding flask, and moulding sand. While this can be performed with small moulds, it constitutes a serious technical problem when vibrating the moulds of massive large-sized castings. It imposes the necessity to use high-power vibrators and large eccentric masses, which must generate a driving force able to move a moulding assembly with a mass of about a dozen or several dozen tonnes. The inability to smoothly change the operating frequency limits the potential of the applied technology considerably; it prevents monitoring of the process and its control which would enable maintaining the level of highest efficiency and performance when compacting the moulding sand. In the currently used vibrating tables, the attachment method for the vibrator which causes the generation of vibrations with a vertical direction is a common design solution, which under unfavourable conditions can lead to the phenomenon of loosening the moulding sand, meaning reducing the degree of its compaction.

The purpose of the invention is to provide a station for implementing a simple and effective technology for compacting moulding sand in the moulds of large-sized massive castings, which would facilitate and expedite the moulding process, at the same time improving the geometrical, dimensional and qualitative properties of the final mould, by increasing the degree and uniformity of its compaction.

The essence of the solution according to the invention is in that the station consists of a set of rubber dampers with a known vibration damping ratio, distributed uniformly under a mould base lying horizontally thereon, with a moulding flask placed thereon, with a pattern placed therein. The moulding flask has attached to it by means of adjustable clamps at least one electric vibrator with power between 0.5 and 1.5 kW, connected to a control console, which is in turn connected to at least two linear acceleration measuring transducers attached to the outer walls of the moulding flask in a manner which enables recording the acceleration values in two mutually perpendicular axes. Moreover, the control console is provided with a frequency changer with an adjustment range of 0 to 200 Hz.

Preferably, the number and distribution of dampers depend on the mass and dimensions of the mould.

In a preferable embodiment, the dampers are distributed along the opposite sides of the mould base.

Preferably, the electric vibrators are attached to the flask in a manner ensuring the generation of a driving force in a horizontal direction, parallel to the plane of the mould base.

Preferably, the rotational speed of the electric vibrators is variable within a range from 0 to 12,000 rpm.

The acceleration of the vibrating set measured in every point thereof has a value within a range from 80 to 120 m/s².

Preferably, the value of the maximum driving force is adjusted by changing the amount and magnitude of eccentric masses before starting the compaction process of the moulding sand.

The main advantage of the solution according to the invention is the use of near-resonance frequencies originating from small vibrators. The moulding assembly transfers its own vibrations to the moulding sand, resulting in the process of its additional compaction. Due to this, an optimally compacted moulding sand in the moulds of large-sized massive castings is produced in an uncomplicated and fully automated process.

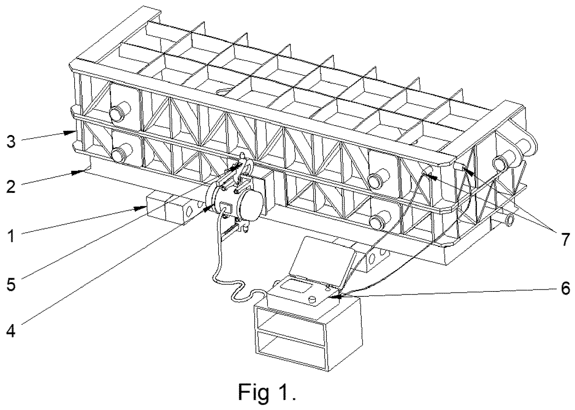

The solution according to the invention is illustrated in an embodiment presented in Fig. 1, presenting a general view of the station.

The pattern stands on a mould base 2 lying on a set of rubber dampers 1 with a known vibration damping ratio. A moulding flask 3 made of welded steel sheets is placed on the mould base, and at least one vibrator 4 with power between 0.5 and 1.5 kW is attached to the moulding flask 3 by means of clamps 5, so as to ensure the generation of a driving force with a horizontal direction, parallel to the plane of the pattern. The operation of the electric vibrator 4 is adjusted by a control console 6 connected thereto. The level of vibrations is controlled by means of at least two linear acceleration measuring transducers 7. The transducers 7 are attached to the outer walls of the moulding flask 3 in a manner which enables recording the acceleration values in two mutually perpendicular axes. Moreover, the control console 6 is provided with a frequency changer, with an adjustment range of 0 to 200 Hz.

Moulding sand is poured steadily into the moulding flask, with the pattern lying on the mould base placed inside. Once the sand fills at least 1/3 of the flask volume, vibrators are activated without interrupting its filling, in a steady and smooth manner increasing the frequency of the supply current, starting with a value of 0 Hz, until the moment of reaching a value of resonant frequency corresponding to the time of reaching the highest acceleration values recorded by the linear acceleration measuring transducers 7. Subsequently, the system automatically reduces the value of frequency, and as the moulding process continues, and at the same time the mass of the entire system increases, the control console 6 records and controls the acceleration values from the measuring transducers 7 and adjusts the value of frequency, so as to keep the vibrating system within the range of near-resonance frequency values. Upon filling the entire volume of the moulding flask, the process is still continued for a time corresponding to 10% of the entire duration of filling the flask.

Evaluation of the technology of vibratory near-resonant compaction of a flat casting mould has been performed for an embodiment of a 2,730 x 2,730 plate mould. The plate pattern seated on the mould base 2 along with the moulding flask 3 were placed on four flexible rubber dampers 1. The flexible dampers enable free vibration of the entire moulding system during the compaction process. In the central part of the longer side of the moulding flask, a vibrator of a VM 700 set has been attached, which imposes a maximum force of 26 kN, and can reach a maximum frequency of 150 Hz.

Such placement of the vibrator results in the intensification of the effects of its action. Sand has been poured into the moulding flask without the participation of a vibrator or manual compaction. An important element of this compaction technology is to keep track of the available lifespan of furan resin. It must be long enough to allow for filling the entire moulding flask 3 and performing the compaction procedure. In the discussed embodiment, the duration of filling the flask 3 was approx. 12 minutes (mixer output 50 Mg/h), and the vibration time was 8 minutes. In order to determine the efficiency of compaction, moulds for preparing strength-test samples of the sand, vibrated simultaneously with the mould, were attached to the moulding flask 3. Also, sand was collected while pouring into the mould, and strength-test samples were prepared from it without vibration. The samples were used to compare the strength of moulding sand with and without vibration. A vibrator 4 was activated after filling the entire moulding flask. The vibrator 4 was configured so as to provide a frequency of approx. 100 Hz, and a driving force of approx. 15 kN. The moulding sand, which fills the flask 3 entirely, damps it out and causes the elimination of the individual vibration ranges inherent to the pattern, the mould base 2, and the moulding flask 3. The entire system is almost monolithic, and it does not vibrate. Under the 'impacts' of the driving force of the vibrator 4, wave phenomena with frequencies corresponding to the operating frequency of the vibrator 4 take place in the entire mould. The waving of the moulding sand causes its compaction, without the occurrence of vibrations of individual sand grains. This allows for compacting the mould without exposing it to the risk of the occurrence of displacements of moving elements, damaging the pattern or the moulding equipment.

## Claims

1. A station for high-frequency vibratory compaction of moulding sand provided with at least one electric vibrator, **characterised in that** it consists of a set of rubber dampers (1) with a known vibration damping ratio, distributed uniformly under a mould base (2) lying horizontally thereon, with a moulding flask (3) placed thereon, with a pattern placed therein, wherein the moulding flask (3) has attached to it by means of adjustable clamps (5) at least one electric vibrator (4) with power between 0.5 and 1.5 kW connected to a control console (6), which is in turn connected to at least two linear acceleration measuring transducers (7) attached to the outer walls of the moulding flask (3) in a manner which enables recording the acceleration values in two mutually perpendicular axes; moreover, the control console (6) is provided with a frequency changer (8) with an adjustment range of 0 to 200 Hz.

2. The station according to claim 1, **characterised in that** the number and distribution of the dampers (1) depend on the mass and dimensions of the mould.

3. The station according to claim 1 or 2, **characterised in that** the dampers (1) are distributed along the opposite sides of the mould base (2).

4. The station according to claim 1 or 2 or 3, **characterised in that** the electric vibrators (4) are attached to the moulding flask (3) in a manner ensuring the generation of a driving force in a horizontal direction, parallel to the plane of the mould base.

5. The station according to claim 1 or 2 or 3 or 4, **characterised in that** the rotational speed of the electric vibrators (4) is variable within a range from 0 to 12,000 rpm.

6. The station according to claim 1 or 2 or 3 or 4 or 5, **characterised in that** the acceleration of the vibrating set measured in every point thereof has a value within a range from 80 to 120 m/s².

7. The station according to claim 1 or 2 or 3 or 4 or 5 or 6, **characterised in that** the value of the maximum driving force is adjusted by changing the amount and magnitude of eccentric masses before starting the compaction process of the moulding sand.
